**Europäisches Patentamt**

**European Patent Office**

**Office européen des brevets**

(19)

(11) Veröffentlichungsnummer: **0 139 176**

**A1**

(12) # EUROPÄISCHE PATENTANMELDUNG

(21) Anmeldenummer: **84110224.7**

(22) Anmeldetag: **28.08.84**

(51) Int. Cl.⁴: **F 16 L 47/00**
**B 29 C 45/00**

(30) Priorität: **29.08.83 DE 3331066**

(43) Veröffentlichungstag der Anmeldung:
**02.05.85 Patentblatt 85/18**

(84) Benannte Vertragsstaaten:
**CH DE FR GB LI NL**

(71) Anmelder: **Diener, Horst**
**Gründlestrasse 1b**
**D-7239 Kämpfelbach-Bilfingen(DE)**

(72) Erfinder: **Diener, Horst**
**Gründlestrasse 1b**
**D-7239 Kämpfelbach-Bilfingen(DE)**

(74) Vertreter: **Raeck, Wilfrid, Dipl.-Ing.**
**Moserstrasse 8**
**D-7000 Stuttgart 1(DE)**

(54) **Verfahren zur Herstellung von Rohrverbindungen zwischen GFK-Rohren und Fittings.**

(57) Zur Herstellung von Rohrverbindungen zwischen Rohren (60) aus warmhärtendem Harz und Glasfaserarmierung sowie entsprechenden Fittings werden die Enden solcher Rohre und Fittings nachträglich oder auch von vornherein mit einer GFK-Material enthaltenden, aus Gießharz bestehenden Schicht zur Bildung einer sich über eine bestimmte Axiallänge erstreckenden Eingriffsfläche (54) versehen, die mit der am anderen Bauteil angebrachten Eingriffsfläche eine abgedichtete Verbindung einzugehen im stande ist. Bei zur Herstellung der Rohrverbindungen notwendigen Fittings wird von vornherein eine hohe Berstfestigkeit dann erreicht, wenn in der Hohlform (10) befindliche entgaste Formmasse durch vom Fittingende her eingeführte, insbesondere als Innendorn (24) ausgebildete Preßstempel von innen her in die Form nach außen verdrängt und verdichtet wird. Alternativ kann aus armiertem Gießharz bestehende Buchse mit einem Gewindeabschnitt oder mit einem glattwandigen konischen Eingriffsbereich nachträglich am Rohr oder Fitting auf- bzw. eingeklebt werden.

EP 0 139 176 A1

./...

Croydon Printing Company Ltd.

FIG.2

DIPL.-ING. WILFRID RAECK

PATENTANWALT
EUROPEAN PATENT ATTORNEY
MANDATAIRE EN BREVETS EUROPÉENS

— 1 ·

7000 STUTTGART 0189176 SEE 8
TELEFON (0711) 24 40 03
TELEX 7 21 865 raeck d

Herr Horst Diener

7239 Kämpfelbach-Bilfingen

— D 46 —

Verfahren zur Herstellung von Kunststoffrohrverbindungen und entsprechenden Fittings

Die Erfindung betrifft ein Verfahren zur Herstellung von Rohrverbindungen zwischen Kunststoffrohren, insbesondere GFK-Rohren und entsprechenden Fittings, wobei der Fitting im allgemeinen mit einem erweiterten Muffenabschnitt zum Übergreifen des anzuschließenden Rohrendes versehen ist.

Im Hinblick auf die höhere Korrosionsbeständigkeit von Kunststoff, insbesondere von glasfaser-armierten Gießharzen, z.B. Epoxy- oder Polyesterharzen gegenüber aggressiven Medien aller Art finden diese Kunststoffmaterialien in steigendem Maß Anwendung auch für solche Rohrleitungen, die aus Gründen des auftretenden Drücke und Warmfestigkeiten bisher Rohren aus metallischen Sonderlegierungen vorbehalten war.

Der Erfindung liegt die Aufgabe zugrunde, ein Verfahren der eingangs bezeichneten Art anzugeben bzw. dahingehend zu verbessern, daß die Enden der für solche Zwecke einzusetzenden Rohre nachträglich mit einfachen Mitteln für Rohrverbindungen, gegebenenfalls höchster Qualität einfach zuverlässig vorbereitet werden können, und daß die zur Herstellung der Rohrverbindungen notwendige Fittings ebenfalls nachträglich oder auch von vornherein für derartige Rohrverbindungen auf wirtschaftliche einfache Weise angepaßt bzw. hergestellt werden können.

Nach dem Grundgedanken der Erfindung wird diese Aufgabe verfahrensmäßig dadurch gelöst, daß zunächst das Rohr an seiner Außenseite und der Fitting an seiner Innenseite durch Entfernen der Deckschicht aufgerauht werden, und daß danach auf die aufgerauhte Oberfläche jeweils eine, insbesondere Glasfasermaterial enthaltende, aus Gießharz bestehende Schicht zur Bildung einer sich über eine bestimmte Axiallänge erstreckenden Eingriffsfläche aufgebracht wird, die nach Erhärten des Gießharzes geeignet ist mit der am anderen Bauteil angebrachten Eingriffsfläche eine abgedichtete Verbindung einzugehen.

Während nach dem Stand der Technik aus GFK-Material bestehende Fittings nur zum Aufstecken und Verharzen mit dem anzuschließenden Rohrende bekannt sind, was langwierige aufwendige Arbeiten an der Baustelle jeweils bis

-/-

zum Abbinden des Harzes bedingt, ermöglicht die Anwendung des erfindungsgemäßen Verfahrens, notfalls
auch nur in gewissem Umfang, eine serienmäßige Vorfertigung der Rohranschlüsse und entsprechenden Fittings,
die dann an der Einsatzstelle zum schnellen Verlegen
der Rohre und Herstellung der Rohrverbindung zur
Verfügung stehen.

Bei einer ersten Ausführungsform des erfindungsgemäßen
Verfahrens wird das Rohr mit seiner im Anschlußbereich
rauhen oder aufgerauhten, gegebenenfalls mit einer
Armierungswicklung (z.B. Roving, Glasvlies, Glasfaserstränge o.ä. Fasern) versehenen Außenfläche in ein
Außengewinde bildendes Hohlformwerkzeug eingelegt,
worauf durch Injektion von Harz ("thermosettable resin",
Epoxyd-Harze oder Polyester-Harze) oder Premix in das
Werkzeug auf dem Anschlußbereich eine Eingriffsfläche
z.B. in Form eines Außengewindes hergestellt wird. Für
Höchstbelastungen des auf dem Rohr angeformten Gewindes
wird dieses vor dem Einlegen in die Hohlform mit einer
Wicklung aus Glasfaserroving versehen.

Um im Anschlußabschnitt, z.B. in der erweiterten Muffe
eines bestehenden Fittings, nachträglich eine Eingriffsfläche z.B. in Form eines Innengewindes herzustellen,
wird nach einem anderen Vorschlag der Erfindung dort
ein die Eingriffsfläche formender Dorn eingeführt , der
zuvor mit einem Trennmittel versehen und dann mit einer
Armierung insbesondere aus Glasfaser, z.B. Roving, Faserbändern, Glasvlies o.a. umwickelt worden ist, worauf
die Form geschlossen und dort Harz oder Premix injiziert
wird.

-/-

Eine grundsätzliche zweite Methode der nachträglichen
Anbringung von Eingriffsflächen auf dem Rohr sowie auf
bzw. in einem Fitting besteht darin, eine vorgefertigte,
insbesondere aus GFK-Material bestehende Gewindebuchse
mit Harz auf das Rohr aufzukleben bzw. in die zuvor
aufgerauhte Steckmuffe des Fittings einzukleben.
Zur Herstellung eines zur Rohrachse konisch verlaufenden
Eingriffsbereiches auf dem Rohr bzw. im Fitting wird
eine aufgerauhte Anschlußfläche zunächst mit einer
Armierungswicklung versehen und dann in eine durch Injektion von Harz oder Premix den konischen Eingriffsbereich bildende Hohlform eingelegt, während im Fall
des Fittings ein den konischen Innenbereich bildender
Innendorn mit Armierungsmaterial umwickelt und danach
der zwischen Dorn und Fittingwand bestehende Hohlraum
mit Harz oder Premix gefüllt wird.

Gemäß einem anderen Vorschlag der Erfindung wird zur
nachträglichen Anbringung eines Gewindeabschnittes oder
eines glattwandigen konischen Eingriffsbereiches am
Rohr und/oder am Fitting eine vorgefertigte, insbesondere
aus armiertem Gießharz bestehende Gewindebuchse bzw.
Anschlußbuchse auf- bzw. eingeklebt.

In weiterer Ausgestaltung der Erfindung wird vorgeschlagen,
die für die besonderen Rohrverbindungen benutzten Fittings nicht anzupassen, sondern von vornherein mit entsprechenden Festigkeiten und inneren Eingriffsflächen
herzustellen. Dazu wird eine Fitting-Hohlform durch
einen den Bereich zwischen den Anschlußabschnitten
bildenden zerlegbaren Innendorn vervollständigt. An diesen kann wenigstens an einem Ende ein den Eingriffsbereich formender Innendornabschnitt angeschlossen
werden. Nach Schließen der Hohlform wird Harz oder
Premix durch einen im Werkzeug zum Umfang der Fittingform etwa tangential bzw. derart geneigt verlaufenden
Kanal injiziert, daß ein im wesentlichen wendelförmiger
Füllverlauf entsteht, in dem sich die Fasern vorwiegend in Umfangsrichtung des Fittings orientieren.
Und auf diese Weise zu einer hohen Berstfestigkeit des
ausgehärteten Formlings beitragen.

Da einerseits zur Gewährleistung hoher Festigkeitswerte ein hoher Glasanteil im Formmaterial notwendig
erscheint, ein solcher Glasanteil andererseits aber
die Verdichtung im Formmaterial dann beeinträchtigen
kann, wenn sich in einem Füllpreßwerkzeug, bei dem
der der Stempel den gesamten Oberteil des Werkzeuges
bildet, beispielsweise die Stempelbewegung behindernde
Glasfaserklumpen bilden, wird erfindungsgemäß zur
Beseitigung dieser Probleme vorgeschlagen, daß der
Injektionskanal im Bereich der Hohlform einen Schlitzquerschnitt mit einer Breite von unterhalb 0,5 mm
und einer größeren Länge von z.B. 25 mm aufweist und
der von einer mit Gießharz, z.B. Premix gefüllten
Vorpreßkammer aus mittels eines Preßstempels beaufschlagt wird. Der schlitzförmige Einlauf und der
dort schon auftretende hohe Druck sorgen für eine Zerlegung von eventuellen im Gießharz vorhandenen Glasfaserklumpen und außerdem für einen formtreue, Maßhaltigkeit und hohe Dichte gewährleistenden freien
Fließvorgang, der so schnell abläuft, daß ohne vorherige

-/-

Abbindevorgänge am Formling keine Fließnahtbildungen vorkommen. Für die strukturelle Gleichmäßigkeit und Formfestigkeit sorgt darüber hinaus der bewußt wendelförmig eingeleitete Verlauf der Ausbreitung des Injektionsgutes von der Eingangsöffnung aus nach beiden oder mehreren Seiten.

Erfahrungen haben gezeigt, daß ein besonders günstiger Kompromiß zwischen hohem Glasanteil zwecks Erzielung hoher Druck- und Berstfestigkeiten einerseits und gutem Fließverhalten des Injektionsmaterials dann gegeben ist, wenn der Glasanteil zwischen etwa 30 % und 40 % , gegebenenfalls mit Faserlängen bis ca 50 mm, liegt, wobei in einem Premix der Gießharzanteil zwischen 50 % und 60 % liegen kann und vorzugsweise ein Füllstoffanteil beispielsweise bei 10 % liegen, wobei Kaolin gegenüber Kreide bevorzugt wird.

Um einer eventuellen Verarmung des Formlings an flüssigen Gießharz entgegenzuwirken, die an vom Einlauf entfernten Stellen des Fittings während der Formung auftreten kann, ist es zweckmäßig, vor dem Eindringen von Premix eine geringe Menge von, z.B. 3 % bis 5 % Gießharz ins Werkzeug einzugeben.

Zur Vermeidung der Nachteile einer ausgeprägten Fließnahtbildung kann in die Hohlform eine Prepregmatte oder ein entsprechendes Gewebe eingelegt werden, die im beheizten Werkzeug mit dem eingebrachten Premix zu einer homogenen Masse erhärten. Nach einem anderen

-/-

grundsätzlichen Vorschlag der Erfindung lassen sich
bei der Fittingherstellung und -vervollständigung
Fließnähte dadurch vermeiden, daß in den Formbereich
des Werkzeuges eine volumenmäßig größere Masse
Premix als das Volumen des herzustellenden Formteils
eingebracht wird, daß durch Verschließen des Werkzeuge die Masse verdichtet und das überschüssige
Formmaterial verdrängt wird, und daß gleichzeitig bzw.
wenigstens eines mindestens bis in die Nähe des Formbereiches bewegbaren, insbesondere als Innendorn
ausgebildeten Preßstempels eine weitere Verdichtung
durchgeführt wird. Durch Anwendung dieses Vorschlages
lassen sich sämtliche Risiken der Naht- oder Lunkerbildung vermeiden, die sonst bei der Injektion von
Gießharz oder Premix entstehen. Indem von vornherein
beim Schließen der Gießform Material im Überschuß vorhanden ist, sind von vornherein sämtliche Hohlräume
der Form ausgefüllt. Durch die angewendete Nachverdichtung mit Hilfe eines oder mehrerer Preßstempel
entsteht eine so dicht Materialstruktur, durch die
auch unter anhaltendem hohen Druck stehende Gase nicht
hindurch diffundieren können.

Von Bedeutung für die Dichtigkeit des GFK-Formmaterials
ist eine vorangehende weitgehende Entgasung des Gießharzes, so daß bevorzugt von einem Premix ausgegangen
wird, bei dem das Harz bereits durch längere Lagerung
und Vorbehandlung weitgehend entgast ist.

In weiterer Ausgestaltung des erfindungsgemäßen Verfahrens lassen sich fließnahtfreie Werkstücke auch
dadurch herstellen, daß man zunächst eine der Fittinggestalt ungefähr ähnliche Premixmasse vorformt und mit Untermaß in das Formwerkzeug einlegt. Nach Schließen
des Formwerkzeuges wird in dieses von wenigstens einem
Fittingende her ein, insbesondere als Innendorn ausgebildeter Preßstempel eingeführt, um das Formmaterial
von innen her in die Form zu verdrängen und zu verdichten. Selbstverständlich kann auch hier, wie oben
angegeben, zuvor außen noch flüssiges Gießharz zuzüglich Härter bzw. Katalysator eingegeben und/oder
eine Prepregmatte eingelegt werden.

Das Prinzip der Verdichtung des Formmaterials bei geschlossenem Werkzeug kann auch so vollzogen werden,
daß von einer oder mehreren Seiten ein Dorn eingeführt
wird. Bei einem T-förmigen Fitting werden vorzugsweise
von drei Seiten gleichzeitig Dorne gegeneinander bis
zum gleichzeitigen Auftreffen aufeinander vorgeschoben.

Gemäß einer Variante kann zur Nachverdichtung der noch
nicht gehärteten Formmasse bei geschlossenem Formwerkzeug mindestens ein Nachverdichtungsstempel über einen
in die Form mündenden Kanal von kleinem Querschnitt
mit großer Kraft beaufschlagt werden. Unter der Voraussetzung, daß sich die Formmasse im Werkzeug vor
Beginn des Abbindens homogen verhält, reicht ein
einziger Druckkanal von kleinem Querschnitt aus, über
den der Form-Hohlraum mit verhältnismäßig einfachen
Mitteln mit sehr hohem Druck beaufschlagt werden kann,
der dazu ausreicht, daß das Material leicht in sämtliche
Formbereiche vollständig eindringt und diese ausfüllt
und in diesen Bereichen zur Verdichtung der gleiche Druck
wie im Preßkanal herrscht. Gegebenenfalls können an
mehreren kritischen Stellen des Formlings solche
Nachverdichtungskanäle einmünden. Die Anwendung von

-/-

hohen Drücken durch das Aufweiten mit Hilfe der Preßstempel wird eine Verflüssigung und eine Homogenisierung
des Premix erreicht.

Gemäß einem weiteren vorteilhaften Merkmal werden
mindestens Bereiche des Rohrabschnittes des Fittings durch
Anformung von Außenrippen als Sechskant-Querschnitt zum
Ansetzen entsprechender Schraubschlüsselweiten hergestellt.

Im Fall einer Rohrverbindung mit konischen Eingriffsflächen besitzt die auf das aufgerauhte Rohrende aufzusetzende vorgefertigte Anschlußbuchse ein zylindrische
Innenseite zum Aufkleben auf das aufgerauhte Rohrende,
wobei ein Übermaß von ungefähr 0,1 mm vorgesehen werden
kann, der gewöhnlich als Bindungsfuge für das Gießharz
ausreicht. An ihrer vorderen Strinseite besitzt die
Aufsetzbuchse einen ähnlich einem Innenflansch vorspringenden Abschnitt, der die Wandstärke des Rohres
wenigstens teilweise überdeckt und an seiner Stirnseite
mit einer Schrägfläche versehen ist, deren im Querschnitt
betrachteter Verlauf zusammen mit einer entgegengesetzt
gerichteten Schrägfläche am zugeordneten Fitting im Anschluß an dessen konische Eingriffsfläche gemeinsam eine
radial nach außen erweiterte, etwa V-förmige Nut bzw.
einen entsprechenden Hohlraum zur Aufnahme einer vorzugsweise flachen Ringdichtung bilden. Die durch beide Bauteile gebildete Dichtungsnut sorgt dafür, daß beim Zusammenpressen von Rohr und Fitting eine dazwischen liegende
Dichtung sich nach außen erweitern und dabei den Hohlraum

-/-

abdichtend ausfüllen kann. Vorzugsweise ist am Innenflansch der Aufsetzbuchse eine die Stirnseite des Rohres
aufnehmende Ringnut eingeformt.

Ausführungsbeispiele der Erfindung sind nachfolgend
anhand der Zeichnungen näher erläutert. Es zeigen

Fig. 1    eine Draufschicht auf ein geöffnetes Hohl-
          Formwerkzeug für einen $90^{\circ}$-Bogen-Fitting
          mit erweiterten Muffenabschnitten mit eingelegten Dornabschnitten,

Fig. 2    eine teilweise geschnittene Ansicht einer
          anderen Ausführungsform eines $90^{\circ}$-Bogen-
          Fittings mit konusförmiger Eingriffsfläche
          in abgedichteter Verbindung mit einem Rohrende, und

Fig. 3    eine Ansicht der Anordnung nach Fig. 2 mit
          Blickrichtung entlang des Rohrachse.

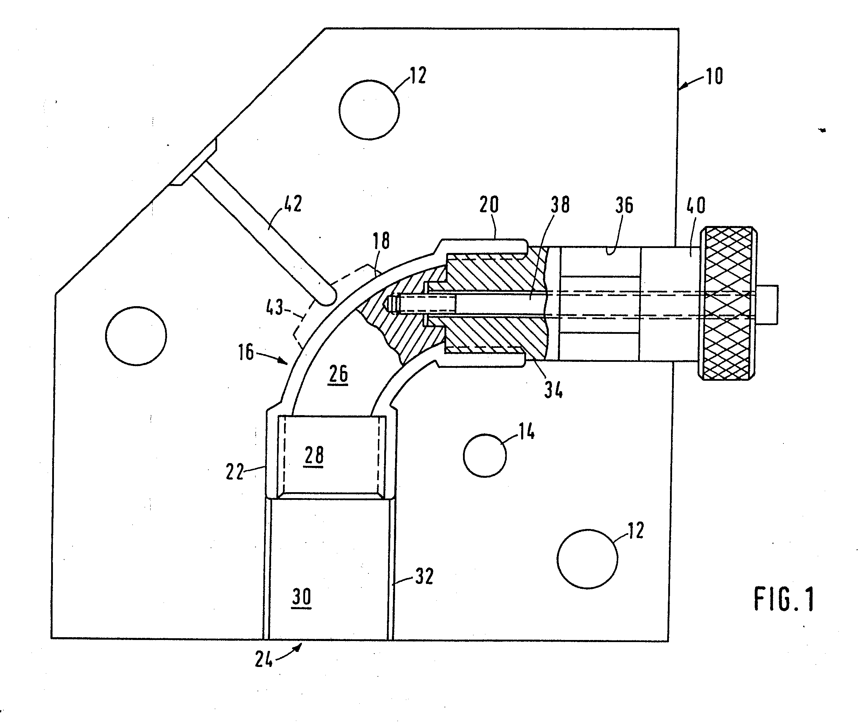

In Fig. 1 ist eine Hälfte eines geöffneten Formwerkzeuges
10 dargestellt, das zur Herstellung eines Rohrfittings
entsprechend einem $90^{\circ}$-Bogen dient, wobei verschiedene
Öffnungen zur Aufnahme von Spannschrauben und Paßstiften
12 bzw. 14 erkennbar sind. Beim geöffneten Werkzeug sind
die Umrisse der Hohlform des Fittings 16 sichtbar, da die
Innendorne eingelegt und am Werkzeug befestigt sind,
welche die Innenkonturen des Fittings bestimmen.

-/-

Der Fitting 16 umfaßt einen gekrümmten Rohrabschnitt 18
und zwei in einem Winkel von 90° zueinander verlaufende
zylindrische Muffenabschnitte 20 und 22, die mit Innengewinde als abdichtende Eingriffsflächen mit einem entsprechenden Außengewinde auf einem Rohrende zur Herstellung einer abgedichteten Rohrverbindung ausgestattet
werden sollen.

Entsprechend Fig. 1 besteht ein Innendorn 24 aus einem
die Innenwandung des Rohrbogens 18 bildenden Abschnitt 26,
einem daran anschließenden des Muffenabschnittes 22
bildenden Abschnitt 28 sowie aus einem daran anschließenden erweiterten Verschlußabschnitt 30, an dessen Umfang Entlüftungs- und Schwundkanäle 32 vorgesehen sind.

Ein zweiter Innendorn 34 wird durch eine um 90° versetzt
angeordnete Bohrung 36 des Werkzeuges 10 eingeführt, um
das Innengewinde des Muffenabschnittes 20 zu bilden.
Durch ein zentrische Bohrung im Dorn 34 erstreckt sich
ein Gewindebolzen 38, der in eine ausgerichtete Gewindebohrung im Dornabschnitt 26 eingeschraubt ist. Eine mit
einem Rändelkopf versehene Schraubmutter 40 sitzt auf
dem äußeren Gewindeabschnitt des Gewindebolzens 38, und
mit Hilfe der Schraubmutter 40 wird der Innendorn 34 bis
zur vollständigen Anlage an der zugekehrten Stirnfläche
des Dornabschnittes 26 innerhalb der Bohrung 36 vorgeschoben, wodurch die Hohlform für den Fitting 16 vervollständigt ist.

-/-

Im Werkzeugkörper 10 befindet sich ein Injektionskanal 42, dessen unteres Ende mit einer außerhalb der
Zeichenebene liegenden, ungefähr tangential zum Umfang
des Rohrabschnittes 18 verlaufenden Mündung versehen
ist. Es ist beabsichtigt dem über dem Kanal 41 herangeführten Harz-Glasfaser-Gemisch von der Mitte des
Fittings aus in Richtung auf beide Muffenabschnitte
hin eine gleichmäßige wendelförmige Ausbreitungsrichtung zu erteilen, da auf diese Weise auch die Fasern
bevorzugt einen Verlauf in Umfangsrichtung nehmen und
in dieser Richtung beim Erhärten des Harzes verbleiben,
so daß nicht nur in Verbindung mit eventuell zusätzlich
auf die Innendorne aufgewickelte Rovings oder Glasfaserbänder günstige Festigkeitswerte erreicht werden.

Nach dem Abbinden des injizierten Harzes wird das Formwerkzeug geöffnet bzw. werden die Dorne 24 und 34 auseinandergeschraubt und dabei auch aus den Innengewindeabschnitten in den Muffen 20, 22 herausgeschraubt. Zu
diesem Zweck können die Dornabschnitte 26, 28, 30 auseinandergenommen werden.

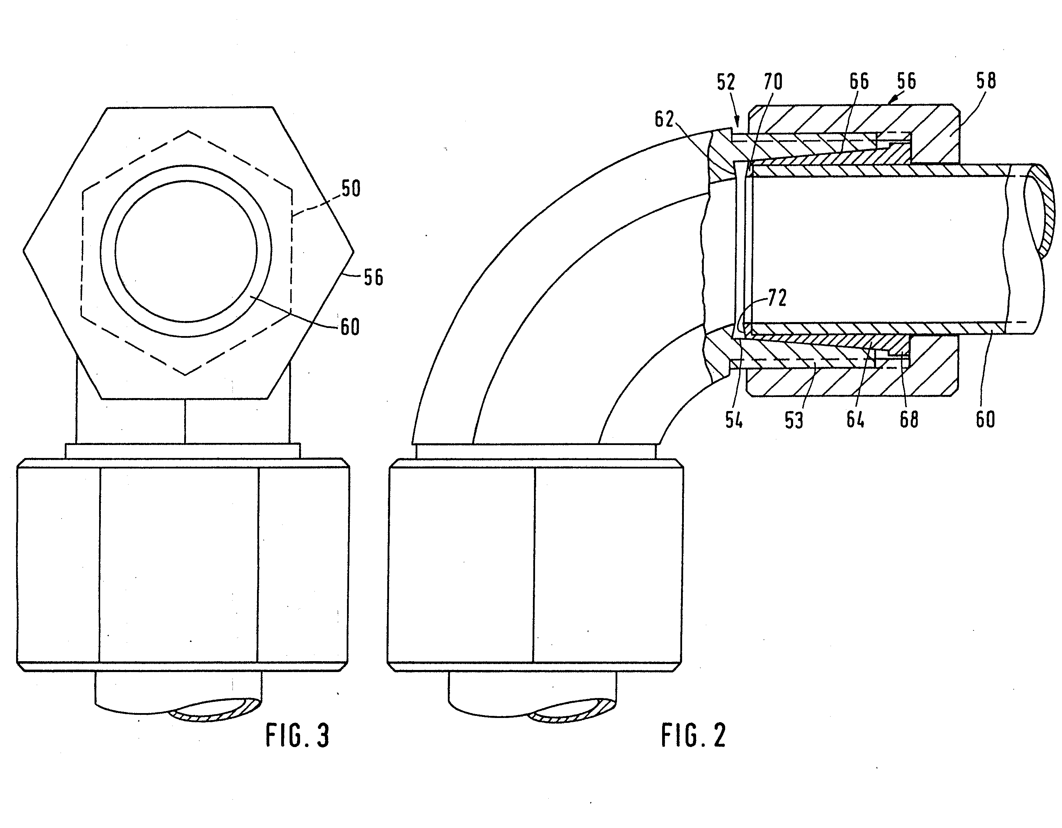

In Fig. 2 und 3 ist ein Fitting ebenfalls in Form eines
90°-Bogens dargestellt, bei dem der Bogen zwecks Aussteifung und erleichtertem Ansatz eines Sechskant-Schraubschlüssels mit einem Sechskant-Außenumfang versehen
ist. Im vorliegenden Ausführungsbeispiel besitzt der
Fitting Endabschnitte 52 mit einem Außengewinde 54 und mit einer inneren Eingriffsfläche in Form einer Innenkonusfläche 54. Der Außengewindeabschnitt dient zur
Aufnahme einer Überwurfmutter 56, deren Innenbund 58
ein mit dem Fitting zu verbindendes Rohr 60 heranzieht. Die Innenkonusfläche 54 erstreckt sich bis zu
einer eine Schrägfläche bildende Innenschulter 62,
deren radial inneres Ende dem Rohr 60 näher ist als
das radial äußere Ende, so daß der in Fig. 2 erkennbare geneigte Verlauf der Schulter 62 entsteht.

Das aus glasfaserarmiertem Kunststoff bestehende Rohr
60 ist an seinem Anschlußbereich mit einer Aufsetzbüchse 64 versehen, die eine konische Außenfläche 66
dergleichen Kegelsteigung wie die Innenkonusfläche 54
aufwiest. Ein rückwärtiger Abschnitt der Aufsetzbüchse 64 bildet eine äußere Ringschulter 68 zur Anlage und zum Eingriff mit der Ringschulter 58 der
Überwurfmutter 56. Die Aufsetzbuchse 64 ist mit einem
Durchmesser-Übermaß von wenigsten 0,1 mm auf das
im Anschlußbereich aufgerauhte GFK-Rrohr 60, vorzugsweise mit Hilfe von Gießharz aufgeklebt.

Der vordere, sich verjüngende Bereich des Aufsetzbuchse
64 geht in eine radial nach innen gerichteten Ringflansch 70 über, der die Stirnseite des Rohres 60 im
wesentlichen überdeckt. Bei einer nicht gezeigten Ausführungsform kann der Innenflansch 70 noch größer sein
und eine nicht gezeigte Ringnut enthalten, in der das
Ende des Rohres 60 gewissermaßen positionierend aufgenommen wird.

Die Stirnseite 72 des Innenflansches 70 besitzt eine
in Fig. 2 erkennbare Neigung, die der Neigung der
Schrägfläche 62 entgegengesetzt ist, so daß zusammen ein sich radial nach außen erweiterter Dichtungsraum entsteht, der bei Anziehen der Überwurfmutter 56
einen etwa V-förmigen Querschnitt annimmt und eine
dort eingeführte nicht gezeigte Dichtung zum vollständigen Ausfüllen des Hohlraumes veranlaßt. Die Ringdichtung wird nach Material und Festigkeit dem auszuhaltenden Druck und dem zu transportierenden chemischen Material ausgewählt.

Bei einer Variante des Formwerkzeuges nach Fig. 1 kann
der Injektionskanal 42 in seinem Einlaufbereich eine
schlitzartige Erweiterung 43 aufweisen, die zur Zeichnungsebene senkrecht eine Schlitzbreite von ca. 0,4 mm
besitzt. Der Injektionskanal 42 kann wesentlich kürzer
als in Fig. 1 sein und insbesondere im Fall der Verwendung von Premix an eine Vorpreßkammer (nicht gezeigt)
angeschlossen sein, die einen Preßstempel enthält, um das
GFK-Gemisch unter hohem Druck durch den Einlaufschlitz
43 in die Hohlform zu pressen. Um im Einlaufschlitz unter
allen Umständen eine Aufbau von Glasfasern und damit
Verstopfungen zu verhindern, können die Schlitzenden
beispielsweise zylindrisch oder in Richtung zur Form
konisch erweitert sein. Aufgrund dieser Maßnahme ist es
möglich, im Premix verhältnismäßig lange Glasfasern zu
verwenden, die ihrerseits zu hoher Festigkeit beitragen.

Bei einer nicht gezeigten Variante des Formwerkzeuges
nach Fig. 1 können die Innendorne 28 - 30 und 34 aus
entsprechend geformten, mit vorderen Gewindeabschnitten
versehenen Preßstempeln bestehen, die mit Hilfe nicht
gezeigter Führungen und Antriebe beim Formvorgang in
das Werkzeug hineingepreßt werden, um die dort befindlich Premix-Masse von innen her aufzuweiten und in sämtliche Formbereiche zu verdrängen. Gegebenenfalls können
diese Preßstempel an den vorderen Enden auch durch Teile
des den Rohrbogen bildenden Abschnittes 26 verlängert
bzw. nach vorn verjüngt sein. Gegebenenfalls reicht es
auch aus, wenn nur von einer Seite des Formwerkzeuges
ein Dorn oder ein Preßstempel eingeführt wird. Das Prinzip
besteht darin, eine vorgeformte Premix-Masse ähnlich einer
Wurst, vorzugsweise mit etwas Untermaß in die Form einzulegen, danach die Form zu verschließen und sich von Enden
her Dorne mit eintreibbaren Abschnitten vorzusehen, so daß
das Material von innen her verdrängt wird. Besonders einfache Maßnahmen zur Nachverdichtung des noch flüssigen
Formmaterials lassen sich dann erzielen, wenn ein Preßstempel mit verhältnismäßig geringem Durchmesser über einen
ebenso kleinen Preßkanal an geeigneter Stelle in den den
Formling aufnehmenden Hohlraum mündet. Über einen solchen
Nachverdichtungsstempel können mit einfachen Mitteln ganz
beträchtliche Drücke während des Zeitraums aufgebracht
werden, in dem das Formmaterial noch homogen flüssig ist.

DIPL.-ING. WILFRID RAECK

PATENTANWALT
EUROPEAN PATENT ATTORNEY
MANDATAIRE EN BREVETS EUROPÉENS

7000 STUTTGART 1, MOSERSTRASSE 8
TELEFON (0711) 24 40 03
TELEX 7 21 865 raeck d  0139176

Herr Horst Diener

7239 Kämpfelbach-Bilfingen

— D 46 —

## Ansprüche

1. Verfahren zur Herstellung von Rohrverbindungen
   zwischen Kunststoffrohren, insbesondere GFK-Rohren
   und entsprechenden Fittings, wobei der Fitting im
   allgemeinen mit einem erweiterten Muffenabschnitt
   zum Übergreifen des anzuschließenden Rohrendes versehen ist,
   d a d u r c h   g e k e n n z e i c h n e t,
   daß zunächst das Rohr an seiner Außenseite und der
   Fitting an seiner Innenseite durch Entfernen einer
   Deckschicht aufgerauht werden, und daß danach auf
   die angerauhte Oberfläche jeweils eine, insbesondere
   Glasfasermaterial enthaltende, im wesentlichen aus
   Gießharz bestehende Schicht zur Bildung einer sich über
   eine bestimmte Axiallänge erstreckenden Eingriffsfläche
   aufgebracht wird, die geeignet ist, mit der am anderen
   Bauteil angebrachten Eingriffsfläche eine abgedichtete
   Verbindung einzugehen.

-/-

2. Verfahren nach Anspruch 1, dadurch gekennzeichnet,
   daß das Rohr mit seiner im Anschlußbereich aufgerauhten und/oder mit einer Armierungswicklung (z.
   B. Roving, Glasvlies u.a.) versehenen Außenfläche
   in ein Außengewinde bildendes Hohlformwerkzeug
   eingelegt und dann auf dem Anschlußbereich durch
   Injektion von Harz oder Premix in das Werkzeug
   eine Eingriffsfläche z.B. in Form eines Außengewindes geformt wird.

3. Verfahren nach Anspruch 1, dadurch gekennzeichnet,
   daß in das Anschlußende des Fittings ein eine Eingriffsfläche formender Dorn eingeführt wird, der
   zuvor mit einem Trennmittel versehen und dann mit
   Glasfaserarmierung (z.B. Roving, Faserbänder, Glasvlies o.a.) worden ist, worauf die Form geschlossen
   und dort Harz oder Premix injiziert wird.

4. Verfahren nach einem der Ansprüche 1 bis 3, dadurch
   gekennzeichnet, daß zur Herstellung eines zur Rohrachse konisch verlaufenden Eingriffsbereiches auf dem
   Rohr bzw. im Fitting eine aufgerauhte Anschlußfläche
   zunächst mit einer Armierungswicklung versehen und
   dann in eine durch Injektion von Harz oder Premix
   den konischen Eingriffsbereich bildende Hohlform eingelegt wird, während im Fall des Fittings ein den
   konischen Innenbereich bildender Innendorn mit Armierungsmaterial umwickelt und danach der zwischen
Innendorn und Fittingwand bestehende Hohlraum mit
Harz oder Premix gefüllt wird.


5. Verfahren nach einem der vorhergehenden Ansprüche,
   dadurch gekennzeichnet, daß zur nachträglichen Anbringung eines Gewindeabschnittes oder eines glattwandigen
   konischen Eingriffsbereiches am Rohr und/oder am
   Fitting eine vorgefertigte, insbesondere aus armiertem
   Gießharz bestehende Gewindebuchse bzw. Anschlußbuchse
   auf- bzw. eingeklebt wird.


6. Verfahren zur Herstellung von Fittings mit einem Anschlußabschnitt zum Übergreifen eines Rohrendes unter
   Verwendung von Eingriffsflächen Anschlußabschnitt
   bildenden Maßnahmen nach einem der Ansprüche 1 bis 5,
   dadurch gekennzeichnet, daß eine Fitting-Hohlform durch
   einen den Rohrabschnitt zwischen den Anschlußabschnitten
   bildenden zerlegbaren Innendorn vervollständigt wird,
   und daß nach Schließen der Hohlform Harz oder Premix
   durch einen im Werkzeug zum Umfang der Fittingform etwa
   tangential bzw. derart geneigt verlaufenden Kanal
   injiziert wird, daß ein im wesentlichen wendelförmiger
   Füllverlauf entsteht, in dem sich die Fasern vorwiegend
   in Umfangsrichtung des Fittings orientieren.

7. Verfahren nach Anspruch 6, dadurch gekennzeichnet,
   daß der Injektionskanal im Bereich der Hohlform
   einen Schlitzquerschnitt mit einer Breite unter
   0,5 mm und einer größeren Länge von z.B. 25 mm
   aufweist und von einer mit Gießwerkstoff z.B. Premix
   gefüllten Vorpreßkammer aus mittels eines Preßstempels
   beaufschlagt wird.

8. Verfahren nach Anspruch 6 oder 7, dadurch gekennzeichnet, daß bei Verwendung von Premix der Glasanteil zwischen etwa 30 % und 40 % liegt mit Faserlängen bis ca 50 mm.

9. Verfahren nach einem der Ansprüche 6 bis 8, dadurch
   gekennzeichnet, daß das Premix einen Füllstoffanteil,
   vorzugsweise Kaolin, von etwa 10 % enthält und der
   Gießharzanteil zwischen etwa 50 % und 60 % liegt.

10. Verfahren nach einem der vorhergehenden Ansprüche,
    dadurch gekennzeichnet, daß in den Formbereich des
    Werkzeuges eine volumenmäßig größere Masse Premix
    als das Volumen des herzustellenden Formteils eingebracht
    wird, daß durch Verschließen des Werkzeuges die Masse
    verdichtet und das überschüssige Formmaterial verdrängt wird und daß gleichzeitig mit Hilfe wenigstens
    eines mindestens bis in die Nähe des Formbereiches
    bewegbaren, insbesondere als Innendorn ausgebildeten
    Preßstempels eine weitere Verdichtung durchgeführt
    wird.

-/-

11. Verfahren nach Anspruch 10, dadurch gekennzeichnet,
    daß eine der Fittinggestalt ungefähr ähnliche vorgeformte Premixmasse mit Untermaß in das Formwerkzeug
    eingelegt wird, anschließend das Formwerkzeug verschlossen und in dieses von wenigstens einem Fittingende her ein, insbesondere als Innendorn ausgebildeter
    Preßstempel eingeführt wird, um das Material von
    innen her in die Form zu verdrängen und zu verdichten.

12. Verfahren nach einem der Ansprüche 6 bis 11, dadurch
    gekennzeichnet, daß zur Nachverdichtung der nicht
    gehärteten Formmasse bei geschlossenem Formwerkzeug
    mindestens ein Nachverdichtungsstempel über mindestens
    einen in die Form mündenden Kanal von kleinem Querschnitt mit großer Kraft beaufschlagt wird.

13. Verfahren nach einem der Ansprüche 6 bis 12, dadurch
    gekennzeichnet, daß vor dem Einbringen von Premix
    eine geringe Menge, z.B. 3 % bis 5 % des Hohlform-
    Volumens Gießharz plus Härter bzw. Katalysator ins
    Werkzeug gegeben werden.

14. Anschlußbuchse zur Durchführung des Verfahrens insbesondere nach Anspruch 5, dadurch gekennzeichnet,
    daß sie eine zylindrische Innenseite zum Aufkleben
    auf das aufgerauhte Rohrende (60) und an ihrer vorderen
    Stirnseite einen radial einwärts vorspringenden Innen-

-/-

flansch (70) aufweist, der die Wandstärke des Rohres
wenigstens teilweise überdeckt oder umfaßt und an seiner
Stirnseite mit einer Schrägfläche (72) versehen ist, die
zusammen mit einer radial oder entgegengesetzt schräg
verlaufenden Ringfläche (62), die sich an die konische
Eingriffsfläche (54) der Fittingmuffe anschließt, einen
sich radial  nach außen erweiternden, etwa V-förmigen
Hohlraum zur Aufnahme einer vorzugsweise flachen Ringdichtung
bilden.

FIG.1

FIG. 3

FIG. 2

Q139176

0139176

**Nummer der Anmeldung**

EP 84 11 0224

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 365 815 (ELCHECO COMPANY LTD.) * Seite 2, Zeilen 68-89; Figur 2 * | 1 | F 16 L 47/00 B 29 C 45/00 |
| A | FR-A-1 177 068 (SOCIETE DES METAUX BLANCS OUVRES) * Seite 1, Zeilen 1-4; Seite 1, Spalte 2, Zeilen 14-17; Figuren 1,2 * | 1 | |
| A | US-A-3 545 718 (K.A. SHALE) * Insgesamt * | 1-3,6 | |
| A | US-A-3 711 590 (P.R. DEUTSCH) * Insgesamt * | 1-3,6 | |
| A | US-A-3 201 154 (M.E. HOLMGREN) | | |

| | | | RECHERCHIERTE SACHGEBIETE (Int. Cl.4) |
|---|---|---|---|
| | | | F 16 L B 29 C |

Der vorliegende Recherchenbericht wurde für alle Patentansprüche erstellt.

| Recherchenort DEN HAAG | Abschlußdatum der Recherche 16-11-1984 | Prüfer ANGIUS P. |
|---|---|---|